Europäisches Patentamt

European Patent Office

Office européen des brevets

(19)

(11) Numéro de publication: **0 423 397 A1**

# (12) DEMANDE DE BREVET EUROPEEN

(21) Numéro de dépôt: 89202610.5

(22) Date de dépôt: 16.10.89

(51) Int. Cl.⁵: **A01G 9/14**

(43) Date de publication de la demande:
24.04.91 Bulletin 91/17

(84) Etats contractants désignés:
AT BE CH DE ES FR GB GR IT LI LU NL SE

(71) Demandeur: **SERCOBEL**
**Wevelgemstraat 18**
**B-8640 Moorsele(BE)**

(72) Inventeur: **Vangeenberghe, Jacques**
**Wevelgemstraat 18**
**B-8640 Moorsele(BE)**

(74) Mandataire: **Pieraerts, Jacques et al**
**Bureau Gevers S.A. rue de Livourne 7 bte 1**
**B-1050 Bruxelles(BE)**

(54) **Serre ou structure analogue.**

(57) Cette invention concerne une serre ou structure analogue qui est constituée de montants transversaux par dessus lesquels est tendue une bâche en matière plastique dont les bords libres latéraux sont retenus dans les profilés longitudinaux de serrage, caractérisée en ce que la bâche précitée est mise sous tension par des éléments (6) montés entre deux montants transversaux (1) et capables de pivoter par rapport à ceux-ci autour d'un axe géométrique parallèle à l'axe longitudinal de la serre ou de la structure analogue.

## SERRE OU STRUCTURE ANALOGUE

La présente invention concerne une serre ou structure analogue qui est constituée de montants transversaux par dessus lesquels est tendue une bâche en matière plastique dont les bords libres latéraux sont retenus dans des profilés longitudinaux de serrage.

Des serres ou structures analogues de ce type sont connues et leur usage est de plus en plus répandu en raison notamment du fait que des serres de grande largeur ne présentant aucun montant de support peuvent être réalisées.

Il est extrêmement important que la bâche de couverture, généralement en plastique translucide, soit tendue correctement par dessus les arceaux ou montants transversaux. A cet effet, les extrémités libres de la bâche, c.à.d. les extrémités de la bâche qui, s'étendant dans le sens longitudinal de la serre, sont saisies dans des profilés de serrage qui s'étendent dans le sens longitudinal de la serre. En général on fait usage de profilés en forme de gouttière ou de U à l'intérieur desquels le rebord libre de la bâche en plastique peut être immobilisé par une baguette qui bloque ou coince la bâche dans la gouttière.

Cette façon de procéder donnerait de bons résultats si les profilés longitudinaux qui réunissent entre eux les montants transversaux n'entraient pas en contact avec la bâche. En effet, il se forme, dans une serre ou une structure analogue, beaucoup d'eau de condensation qui, par la nature des choses, a tendance à s'écouler le long de la bâche en direction du bas. Cette eau de condensation est retenue par les profilés longitudinaux qui sont en contact avec la bâche en matière plastique et à partir de cet endroit où a lieu le contact entre la bâche et le profilé, l'eau s'accumule sur ces profilés et tombe sous forme de grosses gouttes sur les cultures ou sur le sol. Il est bien connu que cette eau d'écoulement est très nuisible et peut empêcher soit la germination des végétaux, soit leur développement normal.

L'invention a donc pour but de remédier à ce très grave inconvénient et de réaliser une serre ou une structure analogue du type décrit dans le préambule qui ne présente pas ce défaut.

Pour réaliser cet objectif conformément à l'invention, la bâche en matière plastique précitée est mise sous tension par des éléments montés entre deux montants transversaux et capables de pivoter par rapport à ceux-ci autour d'un géométrique parallèle à l'axe longitudinal de la serre ou de la structure analogue.

Dans une forme de réalisation avantageuse, les éléments précités présentent une partie rectiligne qui, en position d'utilisation, s'étend parallèlement à l'axe longitudinal de la serre et deux bras formant un angle droit ou sensiblement droit avec ladite partie rectiligne, lesdits bras présentant chacun au moins un point de rotation par rapport aux montants transversaux précités.

Toujours selon l'invention, lesdits éléments sont montés au moins à la partie supérieure de la serre ou de la structure analogue.

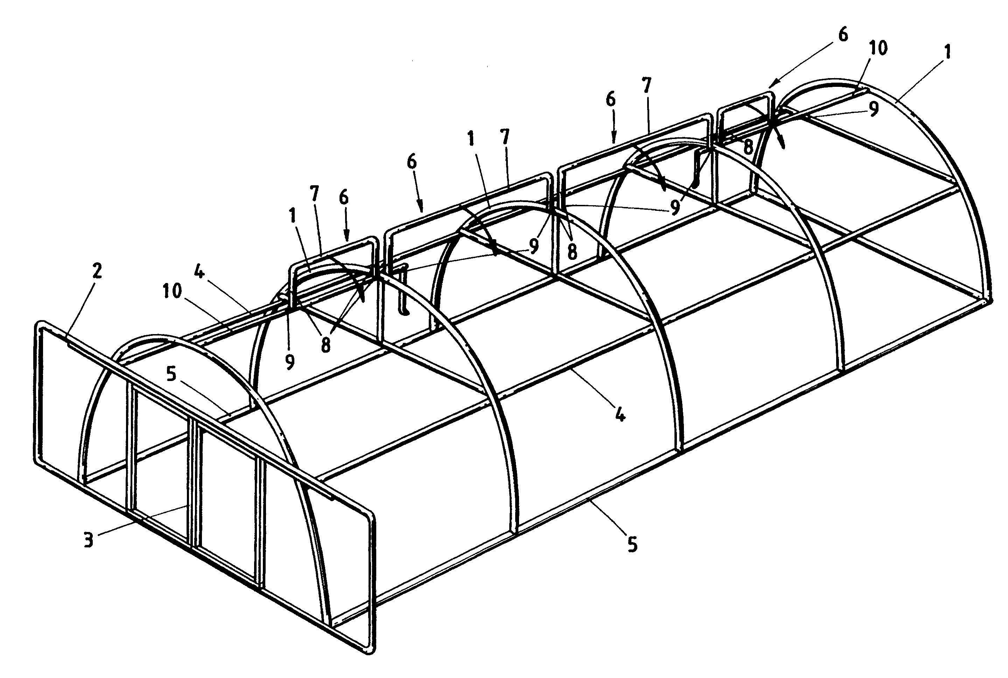

D'autres détails et avantages de l'invention ressortiront de la description qui sera donnée ci-après d'une serre ou structure analogue selon l'invention. Cette description n'est donnée qu'à titre d'exemple et ne limite pas l'invention. Les notations de référence se rapportent à la figure ci-jointe.

Cette figure est une vue schématique et en perspective d'une serre ou structure analogue dans une forme de réalisation préférentielle mais non exclusive.

Les serres auxquelles s'implique l'invention peuvent être constituées selon un mode de réalisation pratiquement devenu traditionnel. Une serre de ce type est donc constituée d'une série de montants transversaux 1 en forme d'arceaux. Au moins à une extrémité est prévue une structure rectangulaire 2 pour une porte de type coulissant 3, par exemple.

Les divers montants transversaux sont réunis entre eux par des profilés longitudinaux 4 et 5. D'autres profilés de renforcement ou de raidissement dont la présence est nécessaire pour assurer la rigidité de la structure n'ont, pour la clarté des dessins et de la description, pas été représentés à la figure.

D'une façon, devenue classique, on déroule par dessus les montants transversaux 1 ou toute autre forme d'arceaux une bâche en matière plastique dont les bords libres qui sont, en position d'utilisation, les bords inférieurs, sont coincés dans un profilé de serrage généralement prévu à la base des montants transversaux, c.à.d. à hauteur, ou au voisinage immédiat, des profilés longitudinaux 5. Il a été dit dans le préambule que cette façon de bloquer la bâche en matière plastique, dans l'espoir de la tendre, est une technique connue à l'heure actuelle.

Pour tendre la bâche en matière plastique dans sa position définitive, il a été imaginé, selon la présente invention, de faire usage d'éléments 6 qui sont montés entre deux mcntants transversaux 1 et qui peuvent pivoter par rapport à ceux-ci autour d'un axe géométrique parallèle à l'axe longitudinale de la serre ou de la structure analogue.

Dans une forme de réalisation préférentielle qui donne d'ailleurs entièrement satisfaction, lesdits éléments 6 présentent une partie rectiligne 7 et deux bras 8 qui sont disposés à angle droit par rapport à la partie rectiligne 7. Il est clair que, pour répondre à des besoins constructifs particuliers, les bras 8 pourraient s'étendre selon un angle différent. Tous les bras 8 appartenant aux éléments 6 ont au moins un point de rotation par rapport aux montants transversaux 1. Un tel point de rotation est indiqué à la figure par la référence 9.

Pour adapter la tension de la bâche, en cours d'utilisation, les bras 8 peuvent présenter un second ou un troisième point d'articulation par rapport aux montants transversaux 1. A la figure on remarque que chacun des bras 8 est prolongé au-delà du point d'articulation 9 et on remarque également que deux points d'articulation 9 par rapport à un montant transversal 1 se trouvent côte à côte sur la partie supérieure d'un tel montant.

Il est évident que, si le besoin s'en faisait sentir, on pourrait monter au moins un second élément de mise sous tension entre chaque paire de deux anneaux transversaux consécutifs 1.

En pratique cependant, de bons résultats ont été obtenus en faisant usage d'un seul élément 6 entre deux montants transversaux 1 et en disposant celui-ci dans la partie supérieure, pratiquement au sommet, chacun des montants transversaux 1.

Lorsque la bâche en matière plastique est tendue, elle entre encore en contact avec le profilé longitudinal 4 mais il est possible de prendre des dispostions pour que chacun des profilés longitudinaux se trouve pratiquement à l'aplomb des extrémités longitudinales de la serre qui, dans beaucoup de cas, ne sont pas occupées par, ni réservées aux cultures.

Pour permettre cet objectif on peut utilement faire usage de montants transversaux ou d'arceaux qui ne décrivent pas un arc de cercle entre les profilés longitudinaux 4 et 5 mais dont la partie inférieure présente plutôt une section droite qui, en position d'utilisation, peut être considérée comme pratiquement verticale. La zone dans laquelle se produit l'égouttage de l'eau de condensation est alors extrêmement réduite.

Pour le reste la tension de la bâche en matière plastique est suffisamment forte pour qu'aucun soutien de celle-ci ne soit nécessaire entre deux montants transversaux 1 ou entre deux arceaux réalisant la même fonction. Les éléments de mise sous tension 6 font d'ailleurs partie d'une structure d'entretoisement grâce à laquelle les différents éléments transversaux sont réunis entre eux à leur partie supérieure.

Lorsqu'un élément de mise sous tension 6 ne s'étend pas totalement sur toute la largeur qui sépare deux montants transversaux, au moins un bras 8 de ceux-ci peut pivoter par rapport à un profilé auxiliaire 10. De tels profilés auxiliaires 10 rencontrent aux deux extrémités de la serre.

De la description qui vient d'être donnée on réalise parfaitement que la mise sous tension par les moyens décrits par la présente demande fournit une solution au problème de l'écoulement de l'eau de condensation tel qu'il a été décrit dans le préambule.

L'invention n'est cependant pas limitée à la forme d'exécution qui vient d'en être décrite et bien des modification pourraient y être apportées sans sortir du cadre de la présente demande de brevet.

## Revendications

1. Serre ou structure analogue qui est constituée de montants transversaux par dessus lesquels est tendue une bâche en matière plastique dont les bords libres latéraux sont retenus dans les profilés longitudinaux de serrage, caractérisée en ce que la bâche précitée est mise sous tension par des éléments (6) montés entre deux montants transversaux (1) et capables de pivoter par rapport à ceux-ci autour d'un axe géométrique parallèle à l'axe longitudinal de la serre ou de la structure analogue.

2. Serre ou structure analogue selon la revendication 1, caractérisée en ce que les éléments précités (6) présentent une partie rectiligne (7) qui, en position d'utilisation, s'étend parallèlement à l'axe longitudinal de la serre et deux bras (8) formant un angle droit ou sensiblement droit avec ladite partie rectiligne (7), lesdits bras (8) présentant chacun au moins un point de rotation (9) par rapport aux montants transversaux précités (1).

3. Serre ou structure analogue selon l'une quelconque des revendications 1 et 2, caractérisé en ce que lesdits éléments (6) sont montés au moins à la partie supérieure de la serre ou de la structure analogue.

Office européen
des brevets

**RAPPORT DE RECHERCHE EUROPEENNE**

Numero de la demande

EP    89 20 2610

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-1195545 (TERLINDEN)<br>* page 1, colonne de droite, alinéa 9 - page 2, colonne de droite, alinéa 1; figures 1-3, 7, 8 *<br>--- | 1-3 | A01G9/14 |
| X | GB-A-869418 (PEARCE)<br>* page 4, lignes 13 - 30 *<br>* page 5, lignes 58 - 102; figures 2, 5-8 *<br>--- | 1-3 | |
| A | FR-A-2595904 (SERRADIMIGNI)<br>* page 4; revendications 1, 2; figures 1-6 *<br>--- | 1-3 | |
| A | FR-A-2488777 (MEIGNE)<br>* page 4; revendication 1; figures 1-3 *<br>----- | 1-3 | |

**DOMAINES TECHNIQUES RECHERCHES (Int. Cl.5)**

A01G

Le présent rapport a été établi pour toutes les revendications

| Lieu de la recherche | Date d'achèvement de la recherche | Examinateur |
|---|---|---|
| LA HAYE | 31 MAI 1990 | PERNEY Y. |

EPO FORM 1503 03.82 (P0402)